# EUROPEAN PATENT SPECIFICATION

(11) **EP 0 717 223 B1**
(45) Date of publication and mention of the grant of the patent: **29.03.2000**
(21) Application number: 95203203.5
(22) Date of filing: 22.11.1995
(51) Int. Cl.: F16L 1/20, F16L 3/237

(54) **Assembly of pipelines intended to lie on a seabed and saddle for securing a second pipeline to a first pipeline**
Auf dem meeresboden verlegte Rohrleitungen und Sattel zur Sicherung einer zweiten an einer ersten Rohrleitung
Assemblé de tuyaux posés au fond de la mer et selle pour securer d'un tuyau à un autre tuyau

(30) Priority: 22.11.1994 NL 9401952
(43) Date of publication of application: 19.06.1996
(73) Proprietor: SUBMARINE PIPELINE SPOILER B.V., 6243 AP Geulle (NL)
(72) Inventor: de Vries, Jacob Simon Pieter, NL-6243 AP Geulle (NL)
(74) Representative: Jilderda, Anne Ayolt

(56) References cited:
- FR-A- 861 121
- FR-A- 2 526 886
- GB-A- 2 165 579
- GB-A- 2 250 079
- NL-A- 9 000 924

## Description

The invention relates to an assembly of pipelines intended to lie on a seabed comprising a first pipeline with a first diameter and a second pipeline with a second diameter, several times smaller than the first diameter, in which the second pipeline is secured to the first pipeline by means of a substantially continuous track of saddles which lie against the outer surface of the first pipeline and embrace the second pipeline over part of its circumference and by means of fastening means which hold the assembly tight together.

Offshore activities for extracting oil and gas involve laying of pipelines. In many cases there is a need to lay pipelines, against which a second pipeline or bundle of pipelines of smaller diameter is fastened, the latter containing cables, gas ducts, and the like. The pipelines are to be fastened to one another and fixed relative to one another by means of saddles, occasionally referred to as piggy backs, of a flexible material, such as rubber or PVC, which are clamped between the pipelines, for example by means of fastener bands around the pipelines, and which are provided at interspacings of, for example, 6 m seen in longitudinal direction. The two pipelines may alternatively be laid with their outer surfaces against one another, so touching one another, or at a distance from one another.

Such an assembly is described in the published Netherlands Patent Application no. 9000924. Reference is made therein to the difficulties encountered in keeping pipelines mutually positioned in a desired manner under the action of currents prevailing in the sea, while the vulnerability of the assembly to damage caused by trawl nets is also noted.

The measure suggested by said Patent Application for counteracting the above disadvantages is to seal up the duct-shaped recesses which extend longitudinally along the pipeline. Practice has shown that even with the use of the above measure the pipelines are still movable relative to one another in lateral direction under the influence of sea currents in an undesirable manner, and that the bundle is still prone to damage owing to trawl nets, especially at the rear/upper side of the second pipeline.

The invention increases the rigidity of an assembly of pipelines and reduces its vulnerability. An assembly of the kind described in the opening paragraph is for this purpose characterized in that the saddles embrace the second pipeline at its side facing away from the first pipeline and in that the saddles comprise a elongated recess which opens at its side facing towards the first pipeline to accommodate the second pipeline. The outer surface of the assembly is thus entirely formed by the outer surface of the saddle construction at the level of the second pipeline. The parts from which the saddle construction is formed are manufactured, for example, from highly impact-resistant PVC material. To hold the assembly together, use is made in known manner of, for example, stainless steel bands which are provided around it with interspacings of, for example, 50 cm.

It is noted that from British patent application number 2.165.579 it is in itself known to apply saddles which entirely surround the second pipeline. These known saddles however are not provided in a substantially continuous track but instead at relatively large interspacing and over-relatively short length. Accordingly the known assembly will still be relatively prone to damage owing to, for instance, trawl nets.

The means by which the second pipeline is surrounded are plate-shaped parts which are curved such that they lie at least partly against the rear outer surface of the second pipeline. Preferably, they lie against the entire or substantially the entire rear outer surface so that a completely smooth exterior is created; where they do not lie against any portion of the rear outer surface, for example with the purpose of applying a spoiler there, it will nevertheless be ensured that the second pipeline is completely surrounded, also the portion thereof mentioned above.

The invention also aims to provide an elongated saddle for use in the assembly referred to hereinbefore which is adapted to the shape and dimensions of the second pipeline such that it completely embraces the second pipeline during use and lie at least partly against the outer surface thereof. To this end a saddle for securing a second pipeline to a first pipeline the second pipeline having a diameter which is several times smaller than the diameter of the first pipeline, comprising two seats intended to bear on an outer surface of the first pipeline and a connection part in between said seats comprising a recess intended to accommodate the second pipeline characterized in that said recess opens in the direction of said seats to receive said second pipeline and in that said connection part entirely embraces said second pipeline at its side facing away from the first pipeline.

To make the outer surface of the assembly as smooth as possible, so that a maximum protection against outside influences such as trawl nets is obtained, the saddles are shaped in order to form a smooth extension of the outer surface of the first pipeline substantially void of any recess. As such the outer surface of the entire construction is smooth and without any substantial disruption.

As was noted above, the portion of the saddle construction which surrounds the second pipeline is preferably provided with a fastening mechanism by means of which a spoiler, i.e. a projection at the exterior of a pipeline or pipeline assembly whereby it buries itself into the seabed under the influence of sea currents, can be fastened.

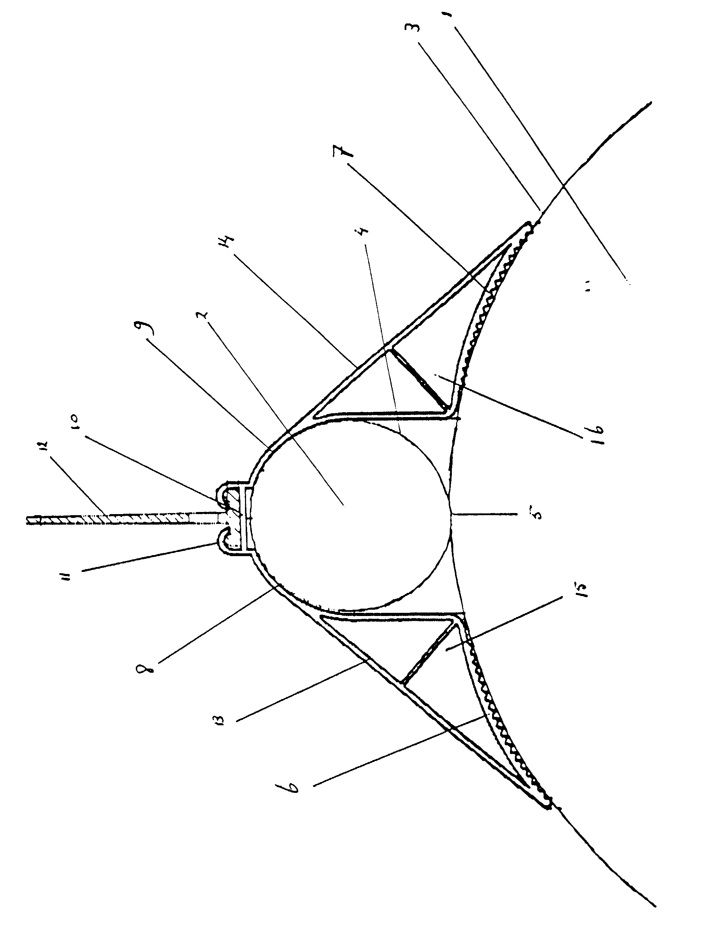

The invention will be explained in more detail with reference to the drawing in which the first pipeline is referenced 1, the second pipeline 2 - possibly a bundle of separate pipelines tightly joined together - with respective outer surfaces 3 and 4. The pipelines 1 and 2 are bundled together, so that they lie with their outer surfaces 3 and 4 against one another at 5.

The pipelines 1 and 2 are held against one another by means of elongated saddles which bear on the outer surface of pipeline 1 with their plate-shaped curved parts 6 and 7 (the seats). The surfaces with which the seats bear on the outer surface are of ribbed construction to improve their grip. Typically the saddles are of the order of 3.6 m long and provided in a substantially continuous track.

The saddle is provided with means 8 and 9, also plate-shaped, which embrace the pipeline 2 in the sense that they each lie around a portion of the rear/upper side of pipeline 2 and bear on the relevant portions 8 and 9 of the outer surface, while they are joined together via the part 10, so that the pipeline 2 is fully surrounded.

In the embodiment drawn, the means 8 and 9 are provided with a mechanism 11 at the rear/upper side of the pipeline 2 whereby a spoiler 12 can be fastened to the saddle in that location. If no spoiler is used, and accordingly no fastening mechanism for it is necessary, the means 8 and 9 may lie against the entire rear outer surface of the pipeline 2.

Parts 13 and 14 provided on the saddle so as to cover respective recesses 15 and 16 achieve that the assembly of the pipelines 1 and 2 has a smooth, coil-shaped exterior, while at the same time enhancing the rigidity of the assembly.

To fix the entire assembly of pipelines in one position, i.e. to prevent the pipelines from moving relative to one another in horizontal and/or vertical direction, the saddle is fixed on the pipeline 1 in usual manner by means of strips provided around the entire assembly with interspacings in longitudinal direction.

## Claims

1. An assembly of pipelines (1,2) intended to lie on a seabed comprising a first pipeline (1) with a first diameter and a second pipeline (2) with a second diameter, several times smaller than the first diameter, in which the second pipeline is secured to the first pipeline by means of a substantially continuous track of saddles (6-11) which lie against the outer surface (3) of the first pipeline and embrace the second pipeline over part of its circumference (4) and by means of fastening means which hold the assembly tight together characterized in that the saddles embrace the second pipeline at its side facing away from the first pipeline and in that the saddles comprise a elongated recess which opens at its side facing towards the first pipeline to accommodate the second pipeline.

2. An assembly as claimed in claim 1 characterized in that said fastening means comprise strips wich run over substantially the entire bare surface of a saddle and wich are placed at regular intervals.

3. An assembly as claimed in claim 1 or 2 characterized in that the saddles rest witch an elongated seat (6,7) against the outer surface (3) of the first pipeline (1) and in that the elongated recess in said saddles is adapted to the shape and dimension of the second pipeline (2) such that it completely embraces and touches it.

4. Assembly as claimed in claim 3 characterized in that the saddles are shaped in ordered to form a smooth extension of the outer surface of the first pipeline substantially void of any recess.

5. Assembly as claimed in claim 3 or 4 characterized in that the saddles are provided with a fastening mechanism (11) for a spoiler (12) at their outer surface.

6. A saddle for securing a second pipeline (2) to a first pipeline (1), the second pipeline having a diameter which is several times smaller than the diameter of the first pipeline, comprising two seats (6,7) intended to bear on an outer surface (3) of the first pipeline (1) and a connection part (8-10) in between said seats comprising a recess intended to accommodate the second pipeline (2) characterized in that said recess opens in the direction of said seats (6,7) to receive said second pipeline and in that said connection part (8-10) entirely embraces said second pipeline (2) at its side facing away from the first pipeline.

7. A saddle as claimed in claim 6 characterized in that said connection portion (8-10) is provided at its outer surface with a fastening mechanism (11) for a spoiler.

## Patentansprüche

1. Ein Aufbau von Rohrleitungen (1,2) zur Verlegung auf dem Meeresboden, bestehend aus einer ersten Rohrleitung (1) mit einem ersten Durchmesser und einer zweiten Rohrleitung (2) mit einem zweiten Durchmesser, der mehrere Male kleiner als der erste Durchmesser ist, wobei die zweite Rohrleitung an der ersten Rohrleitung mit Hilfe einer im wesentlichen durchgehenden Reihe Sattel (6-11), die gegen die Außenfläche (3) der ersten Rohrleitung anliegen und die zweite Rohrleitung über einen Teil ihres Umfangs (4) umschließen, und mit Hilfe von Befestigungsmitteln, die den Aufbau eng zusammenhalten, gesichert ist, dadurch gekennzeichnet, daß die Sattel die zweite Rohrleitung an ihrer der ersten Seite abgewandten Seite umschließen, und darin, daß die Sattel eine längliche Aussparung besitzen, die an der der ersten Rohrleitung zugewandten Seite zur Aufnahme der zweiten Rohrleitung offen ist.

2. Ein Aufbau nach Anspruch 1 dadurch gekennzeichnet, daß besagte Befestigungsmittel Streifen umfassen, die im wesentlichen über die gesamte freiliegende Oberfläche eines Sattels verlaufen und die in regelmäßigen Abständen angeordnet sind.

3. Ein Aufbau nach Anspruch 1 oder 2, dadurch gekennzeichnet, daß die Sattel mit einem länglichen Sitz (6,7) auf der Außenfläche (3) der ersten Rohrleitung (1) ruhen, und daß die längliche Aussparung in den besagten Satteln an die Form und Abmessungen der zweiten Rohrleitung (2) derart angepaßt ist, daß sie sie vollständig umschließt und berührt.

4. Ein Aufbau nach Anspruch 3, dadurch gekennzeichnet, daß die Sattel so geformt sind, daß sie eine weiche Verlängerung der Außenfläche der ersten Rohrleitung bilden, die frei von jeglichen Einschnitten ist.

5. Ein Aufbau nach Anspruch 3 oder 4, dadurch gekennzeichnet, daß die Sattel an ihrer Außenfläche mit einem Befestigungsmechanismus (11) für einen Spoiler (12) versehen sind.

6. Ein Sattel zur Sicherung einer zweiten Rohrleitung (2) an einer ersten Rohrleitung (1), wobei die zweite Rohrleitung einen Durchmesser hat, der mehrere Male kleiner als der Durchmesser der ersten Rohrleitung ist, der zwei Sitze (6,7) umfaßt, die an einer Außenfläche (3) der ersten Rohrleitung (1) als Träger vorgesehen sind, und ein Verbindungsteil (8-10) zwischen den besagten Sitzen, das eine Aussparung zur Aufnahme der zweiten Rohrleitung (2) besitzt, dadurch gekennzeichnet, daß die besagte Aussparung in der Richtung der besagten Sitze (6,7) zur Aufnahme der zweiten Rohrleitung offen ist, und daß das besagte Verbindungsteil (8-10) die besagte zweite Rohrleitung (2) an der der ersten Rohrleitung abgewandten Seite vollständig umschließt.

7. Ein Sattel nach Anspruch 6, dadurch gekennzeichnet, daß das besagte Verbindungsteil (8-10) an seiner Außenfläche mit einem Befestigungsmechanismus (11) für einen Spoiler versehen ist.

## Revendications

1. Assemblage de tuyaux (1, 2) destiné à être posé au fond de la mer consistant en un premier tuyau (1) ayant un premier diamètre et un second tuyau (2) ayant un second diamètre, plusieurs fois plus petit que le premier diamètre, dans lequel le second tuyau est attaché au premier tuyau à l'aide d'une voie considérablement continue de selles (6-11) reposant contre la surface extérieure (3) du premier tuyau et entourant le second tuyau sur une partie du périmètre (4) et à l'aide de moyens de fermeture qui tiennent l'assemblage fixé, caractérisé du fait que les selles entourent le second tuyau au coté qui n'est à coté du premier tuyau et que les selles contiennent un renfoncement allongé qui s'ouvre au coté en face du premier tuyau afin de renfermer le second tuyau.

2. Un assemblage comme demandé dans la revendication 1 caractérisé du fait que les moyens de fermeture mentionnés contiennent des bandes qui courent notablement l'entière surface d'une selle et qui sont placés à des intervalles réguliers.

3. Un assemblage comme demandé dans les revendications 1 ou 2 caractérisé du fait que les selles reposent avec un appui allongé (6, 7) contre la surface extérieure (3) du premier tuyau (1) et du fait que le renforcement allongé dans les selles mentionnées est adapté à la forme et la dimension du second tuyau (2) tellement qu'il le marie complètement et qu'il le touche.

4. Assemblage comme demandé dans la revendication 3 caractérisé du fait que les selles sont formées d'une telle façon afin de former une prolongation lisse de la surface extérieure du premier tuyau notablement sans aucun renfoncement.

5. Assemblage comme demandé dans la revendication 3 ou 4 caractérisé du fait que les selles sont pourvues d'un mécanisme de fermeture (11) pour un becquet (12) sur leur surface extérieure.

6. Une selle pour sécuriser un second tuyau (2) à un premier tuyau (1), le second tuyau ayant un diamètre qui est plusieurs fois plus petit que le diamètre du premier tuyau, contenant deux appuis (6, 7) destinés à supporter sur une surface extérieure (3) du premier tuyau (1) et un élément de connexion (8-10) entre les appuis mentionnés contenant un renfoncement destiné à contenir le second tuyau (2) caractérisé du fait que le renfoncement mentionné s'ouvre dans la direction des appuis mentionnés (6, 7) pour recevoir le second tuyau mentionné et que dans l'élément de connexion mentionnés (8-10) complètement entoure le second tuyau mentionné (2) de son coté pas en face du premier tuyau.

7. Une selle comme demandée dans la revendication 6 caractérisé du fait que la partie de connexion mentionnée (8-10) est pourvue d'une mécanisme de fermeture (11) pour un becquet sur sa surface extérieure.
